# EUROPEAN PATENT APPLICATION

(11) **EP 2 360 928 A1**
(43) Date of publication of application: **24.08.2011**
(21) Application number: 11153584.5
(22) Date of filing: 07.02.2011
(51) Int. Cl.: H04N 7/26, H04N 7/30

(54) **A method for image compression**

(30) Priority: 12.02.2010 TR 201001101
(71) Applicant: Vestel Elektronik Sanayi ve Ticaret A.S., 45030 Manisa (TR)
(72) Inventor: Sahin, Ahmet, 45030 Manisa (TR); Tetik, Yusuf Engin, 45030 Manisa (TR)
(74) Representative: Cayli, Hülya

(57) **Abstract**

A lossy data compression method developed for compressing image data comprising the steps of: subdividing the frame into n x n square blocks; at the left top corner (around the DC coefficient) of the n x n block, defining a smaller m x m region (m < n); DCT transformation of n x n block; quantization of DCT transformed block; zigzag scanning of DCT transformed and quantized n x n block; subjecting the vector, which is obtained through zigzag scanning, to variable length encoding with two different VLC tables (VLC1; VLC2) by encoding the inner portion of the m x m block with the shorter coded VLC1 table and encoding the portion of n x n block which is excluded from m x m block, with VLC2 table.

## Description

### Technical Field

Present invention relates to improvements in lossy data compression wherein modified discrete cosine transform (MDCT) encoding is employed.

### Prior Art

Rapid development of such digital imaging applications as desktop publishing, multimedia, teleconference and HDTV applications has given rise to need for improvement in efficient and standard data compression techniques. Lossy compression standards, which have emerged due to this need, are as follows: JPEG for still images, MPEG for compression of motion video, and CCITT H.261 (also known as Px46) for compression of data concerning video telephone and teleconference applications.

When data are compressed and then decompressed, they differ from its original format, and are subject to some distortion as well as data loss in lossy compression methods, but the data are still similar to the original data to a usable extent. Lossy compression is commonly used in compressing multimedia data (audio, video, still image).

Discrete cosine transform (DCT) is widely used in lossy compression methods wherein high frequency minor components can be ignored. DCT defines a plurality of data points as the sum of cosine functions oscillating at differing frequencies.

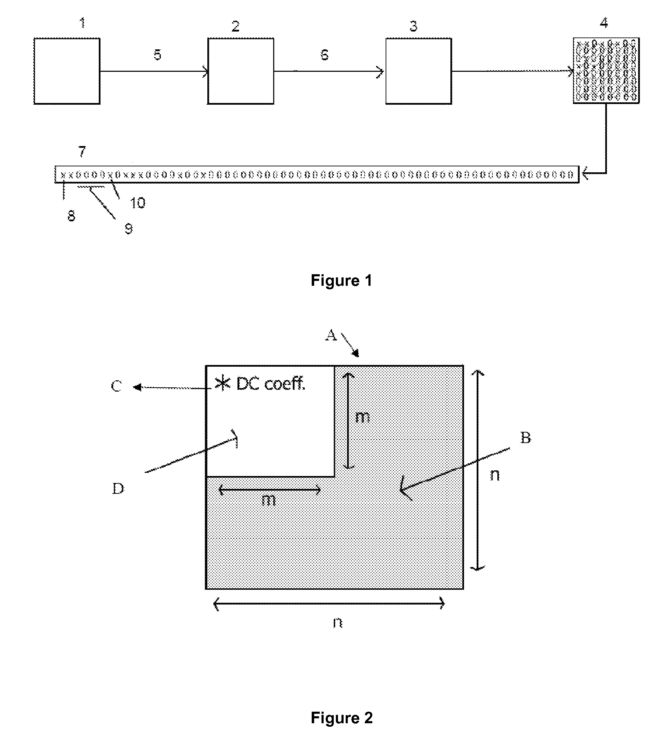

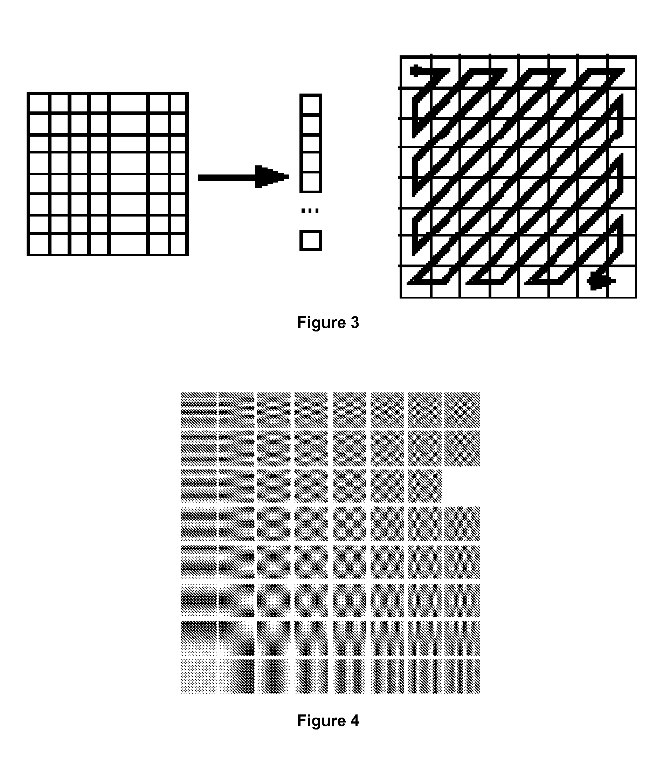

In the data compression methods of the prior art, encoders divides the frames into n x n (e.g. the frame is divided into an 8 x 8 block for mpeg2) square blocks, as illustrated in Figure 1. These blocks are DCT transformed. The DCT transformed blocks are then quantized. Quantization means assigning an approximate value with discrete symbols or number values which are comparatively lesser with respect to a continuous value range. DCT transformed and quantized n x n block is zigzag scanned. The aim of zigzag scanning is to convert an 8 x 8 square into a 1 x 64 vector (n x n square into a 1 x n² vector) and to ensure that low frequency coefficients are grouped around top portion of the vector. Figure 3 shows execution of zigzag scanning. An encoding called "run length encoding" is applied on the vector which is obtained through zigzag scanning; and a variable length encoding is applied to the resulting encoding. For instance, there exist variable length code (VLC) tables that are used for such coding schemes as MPEG 1 and MPEG 2. These tables are designed particularly for 8 x 8 blocks considering the probability of runs and levels that may come from such a block. Said "run" and "level" are terms concerning run length encoding. "Run" defines successive zeros between two different coefficients other than zero. "Level" defines non-zero coefficient following successive zeros. For instance, Run = 5 and Level = 2 for [3,0,0,0,0,0,2] vector; Run = 3 and Level = -1 for [8,0,0,0,-1] vector. The design of VLC tables directly affects the degree of compression. VLC tables should cover all possible run and level pairs, even the least probable run and level pair should be represented, in order to perform compression at a desired degree. This restricts the efficiency of such tables.

Published patent application US5333212 discloses a method employed together with JPEG image compression technique. JPEG calls for subdividing the image into blocks, transforming the array of pixel values in each block according to a discrete cosine transform (DCT) so as to generate a plurality of coefficients, quantizing the coefficients for each block, and entropy encoding the quantized coefficients for each block. One or more of the available techniques are used for eliminating weak components in order to selectively decrease bit rate of the compressed image for said block. These techniques include subjecting each selected block to a low pass filtering operation prior to DCT transform, subjecting the coefficients for each selected block to a thresholding operation before or after the quantizing step, subjecting the coefficients for each selected block to a downward weighting operation before encoding them, or, where the entropy encoding uses Huffman codes, mapping coefficients to adjacent shorter codes. The aim of these techniques is to eliminate weak components as well as components having high spatial frequency and thus to ensure a visual quality while ensuring a significant compression. This increases the process load since it requires filtering, thresholding and weighting.

Published patent application WO9904553 comprises a DCT based lossy compression method. Image is first subdivided into blocks (8 x 8 pixels, for instance), according to said method. DCT (comprising a set of DCT coefficients) is performed for each block. A quantization table is selected from a set of quantization tables and, using the selected table, the coefficients of each DCT are quantized. A zero-value index, corresponding to the average number of zero value quantized DCT coefficients per DCT, is determined. A predicted zero-value index is calculated using said predefined bit budget and a quantization table selected from said set of tables using the determined index and the predicted index. Using that selected table, the unquantized coefficients of the DCTs are requantized and the requantized coefficients are also compressed.

### Objective of the Invention

The aim of the invention is to provide a more efficient data compression by defining a smaller m x m (m < n) block that covers dominant (weighted) values around DC value within an n x n (8 x 8) block and by encoding on this block.

Another aim of the invention is to provide a more efficient data compression by employing a custom VLC table, which has been generated for the smaller m x m (m < n) block around DC value, instead of employing a VLC table for entire n x n (8 x 8) block.

A further aim of the invention is to provide a more efficient data compression by using smaller variable lengths for encoding the most significant DCT coefficients.

Another aim of the invention is to ease the process load by eliminating less significant DCT coefficients excluded from the smaller (m x m) block where encoding is performed, and to provide compression with the same data quality as the known methods but with a higher capacity.

### Brief Description of Drawings

The method of the invention and embodiments of the prior art are illustrated in the annexed figures wherein
**Figure 1** shows a data compression method of the prior art.
**Figure 2** shows an embodiment of the data compression method of the invention.
**Figure 3** shows performing of zigzag scanning.
**Figure 4** shows an exemplary view of a DCT transformed 8 x 8 block of a natural image.

Reference numbers on drawings and corresponding meanings thereof are as follows:
(1) 8 x 8 block
(2) DCT transformed 8 x 8 block
(3) DCT transformed and quantized 8 x 8 block
(4) Zigzag scanning
(5) DCT operation
(6) Quantization
(7) Zigzag scanned series
(8) DC value
(9) Run
(10) Level
(A) DCT transformed and quantized 8 x 8 block
(B) Region where DCT coefficients are eliminated
(C) m x m block around DC coefficient
(D) Region where DCT coefficients are encoded with VLC table

### Disclosure of the Invention

DCT is a technique used for converting a signal into simple frequency components and is widely used in data (image) compression. Rapid development of such digital imaging applications as desktop publishing, multimedia, teleconference and HDTV applications has given rise to need for improvement in efficient and standard data compression techniques. The standards that emerged due to this need are as follows: JPEG for still images, MPEG for compression of motion video, and CCITT H.261 (also known as Px46) for compression of data concerning video telephone and teleconference applications. All three standards adopt the basic technique known as DCT.

Figure 4 shows a two dimensional DCT transformed 8 x 8 series of a natural image. Each fundamental matrix is characterized by a horizontal and vertical spatial frequency. Illustrated matrices are arranged such that the frequency increases from left to right and from bottom to top. The brightest pixel at the bottom left corner is known as DC coefficient and has a frequency of (0, 0). That pixel is the mean value of the entering pixels and typically is the largest coefficient in DCT of natural images.

Quantization is utilized in order to reduce the data required for displaying the image in DCT based image compression applications. Quantization means reducing the number of probable values of an amount, which therefore reduces bit rate required for displaying said data. In JPEG image compression standard, each DCT coefficient is generated using a weight based on frequencies of said coefficient. Coefficients of each 8 x 8 block are subdivided by a corresponding 8 x 8 quantization matrix, and the product is rounded to the closest digit. High spatial frequencies are usually less visible by eye than low frequencies. Therefore, high quantization factors are often selected for high frequencies.

The most significant frequency coefficients are grouped around DC coefficients when a natural image is DCT transformed into an 8 x 8 block as illustrated in Figure 4 and mentioned above. The farther the DCT coefficients from DC value are, the lower the value and significance of DCT coefficients become.

Figure 2 shows an embodiment of the method of the invention. Instead of using a VLC table for the entire n x n (8 x 8) block, said method generates a custom VLC table for a smaller m x m (m < n) block around the DC value. Since smaller m x m will be scanned during zigzag scanning, runs will be shorter in the vector obtained as a result of the zigzag scanning of this block. For this reason, shorter codes can be used in VLC table which is to be generated for smaller m x m block (for instance, each Run + Level pair is encoded with a variable length bit sequence in MPEG2, e.g. code is 1011 for Run = 2, Level = 2). In this way, efficiency of the new VLC table is enhanced. In other words, shorter VLC codes will be used for encoding low frequency and more significant DCT coefficients. Inner portion of m x m block shown in Figure 2 will be encoded with a shorter coded VLC1 table whereas the portion of n x n block, which is excluded from m x m block, will be encoded with a VLC2 table. Designing such a custom VLC table for smaller m x m block, when compared to using standard tables for larger sized n x n block, will provide more compression with same image quality. Less significant DCT coefficients excluded from smaller m x m block will be eliminated, which thus allow more compression. Depending on application, target rate and target distortion, the size of the internal (m x m) block may vary.

The steps of an embodiment of the method are:
- Subdividing the frame into n x n square blocks;
- At the left top corner (around the DC coefficient) of the n x n block, defining a smaller m x m region (m < n);
- DCT transformation of n x n block;
- Quantization of DCT transformed block;
- Zigzag scanning of DCT transformed and quantized n x n block;
- Applying variable length encoding on the vector, which is obtained through zigzag scanning, with two different VLC tables (VLC1; VLC2) in the following manner:
   ■ inner portion of the m x m block will be encoded with the shorter coded VLC1 table;
   ■ the portion of n x n block, which is excluded from m x m block, will be encoded with VLC2 table.

## Claims

1. A lossy compression method for compression of image data **characterized in that** it comprises the steps of
- Subdividing the frame into n x n square blocks;
- At the left top corner (around the DC coefficient) of the n x n block, defining a smaller m x m region (m < n) ;
- DCT transformation of n x n block;
- Quantization of DCT transformed block;
- Zigzag scanning of DCT transformed and quantized n x n block;
- Subjecting the vector, which is obtained through zigzag scanning, to variable length encoding with two different VLC tables (VLC1; VLC2) by
o encoding the inner portion of the m x m block with the shorter coded VLC1 table;
o encoding the portion of n x n block which is excluded from m x m block, with VLC2 table.

2. A data compression method according to Claim 1 **characterized in that** m x m block is encoded with said VLC1 table comprising shorter VLC codes, which is generated for m x m block.

3. A data compression method according to Claim 1 or Claim 2 **characterized in that** "m" value is selected according to the desired compression degree.
